(19) Europäisches Patentamt
European Patent Office
Office européen des brevets

(11) **EP 2 866 020 B1**

(12) **FASCICULE DE BREVET EUROPEEN**

(45) Date de publication et mention de la délivrance du brevet:
**22.02.2023 Bulletin 2023/08**

(21) Numéro de dépôt: **14189689.4**

(22) Date de dépôt: **21.10.2014**

(51) Classification Internationale des Brevets (IPC):
*G01N 5/02* *(2006.01)*    *G01N 29/02* *(2006.01)*
*G01L 1/14* *(2006.01)*    *G01L 1/18* *(2006.01)*
*G01L 1/22* *(2006.01)*    *G01N 29/036* *(2006.01)*

(52) Classification Coopérative des Brevets (CPC):
**G01N 29/022; G01L 1/148; G01L 1/18; G01L 1/2293; G01N 5/02; G01N 29/036;** G01N 2291/02466; G01N 2291/0256

(54) **Dispositif de détection électromécanique, pour la détection gravimétrique**

Vorrichtung zur elektromechanischen Erfassung, zur gravimetrischen Erfassung

Electromechanical detection device for gravimetric detection

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2013 FR 1360281**

(43) Date de publication de la demande:
**29.04.2015 Bulletin 2015/18**

(73) Titulaire: **Commissariat à l'Énergie Atomique et aux Énergies Alternatives**
**75015 Paris (FR)**

(72) Inventeurs:
• **Hentz, Sébastien**
**38760 Varces Allières Et Risset (FR)**
• **Ernst, Thomas**
**38210 Morette (FR)**

(74) Mandataire: **Brevalex**
**Tour Trinity**
**1 Bis Esplanade de La Défense**
**CS 60347**
**92035 Paris La Défense Cedex (FR)**

(56) Documents cités:
**US-A1- 2006 086 174**    **US-A1- 2012 144 918**

• **TOFFOLI VALERIA ET AL: "Actuation of silicon pillar micro-mechanical resonators by Kelvin polarization force", MICROELECTRONIC ENGINEERING, vol. 111, 30 mai 2013 (2013-05-30), pages 1-6, XP028673648, ISSN: 0167-9317, DOI: 10.1016/J.MEE.2013.05.013**
• **KEHRBUSCH J ET AL: "Columnar shaped microresonators for mass detection and gas analysis", MICROELECTRONIC ENGINEERING, ELSEVIER PUBLISHERS BV., AMSTERDAM, NL, vol. 87, no. 5-8, 23 novembre 2009 (2009-11-23), pages 817-820, XP026945313, ISSN: 0167-9317, DOI: 10.1016/J.MEE.2009.11.075 [extrait le 2009-11-23]**
• **KEHRBUSCH J ET AL: "High frequency columnar silicon microresonators for mass detection", APPLIED PHYSICS LETTERS, AMERICAN INSTITUTE OF PHYSICS, US, vol. 93, no. 2, 14 juillet 2008 (2008-07-14), pages 23102-1-23102-3, XP012112462, ISSN: 0003-6951, DOI: 10.1063/1.2957653**

EP 2 866 020 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## DOMAINE TECHNIQUE

La présente invention concerne un dispositif de détection électromécanique (en anglais, *electromechanical détection device*), ainsi qu'un procédé de fabrication de ce dispositif.

Ce dernier peut être un dispositif résonant, auquel cas il comporte généralement une poutre constituant un résonateur, ou un dispositif non résonant.

L'invention s'applique notamment à la détection gravimétrique et plus particulièrement aux capteurs chimiques pour la détection de gaz, aux capteurs biologiques en milieu liquide pour la détection de cellules biologiques, et à la spectrométrie de masse à base de MEMS (pour « *Micro-Electro-Mechanical Systems* ») et/ou de NEMS (pour « *Nano-Electro-Mechanical Systems* »), appelée aussi MEMS-MS et/ou NEMS-MS (où MS signifie spectrométrie de masse).

L'invention peut aussi s'appliquer à une détection de force, de contrainte ou de déformation.

## ETAT DE LA TECHNIQUE ANTERIEURE

On connaît déjà des dispositifs résonants à actionnement dans le plan. Tous ces dispositifs comprennent des poutres qui sont parallèles aux substrats de ces dispositifs. On se référera aux documents suivants :

WO 2012/034949, invention de S. Hentz
WO 2012/034951, invention de S. Hentz et al.
WO 2012/034990, invention de S. Hentz.

On rappelle maintenant le principe de la détection résonante de masse (en anglais, *résonant mass detection*).

On considère une particule ou un ensemble de particules, de masse totale $m_p$, qui se pose sur la surface d'un résonateur, de raideur k et de masse effective m. La fréquence de résonance du résonateur devient alors égale à : $f = \frac{1}{2\pi}\sqrt{\frac{k}{m+m_p}}$ . Les pics des réponses en fréquence (en boucle ouverte), avant et après dépôt de la masse $m_p$, sont donc décalés d'une quantité $\Delta f$ qui est peu différente de . $-\frac{m_p}{2m} \cdot \frac{1}{2\pi}\sqrt{\frac{k}{m}}$ . Lorsque le résonateur est utilisé en boucle fermée, on peut donc suivre sa fréquence de résonance en temps réel à l'aide de moyens de transduction électrique et de moyens de fermeture de boucle.

On constate que l'adsorption d'une particule individuelle ou d'un groupe de particules d'un analyte sur la surface du résonateur fait décroître brutalement la fréquence de résonance de celui-ci. On peut déduire la masse de la particule ou du groupe de particules à partir de la mesure du saut en fréquence $\Delta f$.

Le principe de détection que l'on vient de rappeler est tout à fait générique, et l'on connaît divers dispositifs pour le mettre en application, notamment les résonateurs à ondes acoustiques de surface (en anglais, *surface acoustic wave resonators*), les résonateurs à ondes acoustiques de volume (en anglais, *bulk acoustic wave resonators*), les microbalances à cristal de quartz (en anglais, *quartz crystal microbalances*) et les poutres MEMS (pour « *Micro-Electro-Mechanical System* »).

Mais le dispositif résonant peut avantageusement être un NEMS puisque l'expression du saut en fréquence $\Delta f$, donnée plus haut, montre que la sensibilité de la fréquence à un ajout de masse est d'autant plus grande que la masse totale du résonateur est petite. Les dispositifs résonants de dimensions nanométriques ont donc un avantage certain en termes de sensibilité, mais aussi en termes de limite de détection. C'est ainsi que l'on a pu mesurer, avec des NEMS, des masses $10^{12}$ fois plus faibles que celles que l'on avait mesurées avec des microbalances à cristal de quartz. A ce sujet, on se reportera au document suivant :

K.L. Ekinci, Y. T. Tang et M. L. Roukes, 2004, "Ultimate limits to inertial mass sensing based upon nanoelectromechanical systems", Journal of Applied Physics 95 (5): 2682. doi:10.1063/1.1642738**.**

De même, on a pu récemment mesurer une masse de l'ordre de 1 yg ($10^{-27}$ kg). A ce sujet, on se reportera au document suivant :

J. Chaste, A. Eichler, J. Moser, G. Ceballos, R. Rurali et A. Bachtold, 2012, "A nanomechanical mass sensor with yoctogram resolution", Nature Nanotechnology 7: 301-304. doi:10.1038/nnano.2012.42**.**

Les applications de la détection résonante de masse sont multiples. On peut par exemple citer (1) les capteurs chimiques pour la détection de gaz, (2) les capteurs biologiques en milieu liquide pour la détection de cellules biologiques, et (3) la spectrométrie de masse à base de NEMS (NEMS-MS). Pour ces applications, la limite de détection (la masse détectable la plus faible) est bien sûr primordiale, non seulement afin de déterminer le plus précisément possible la quantité de matière mesurée, mais aussi afin de détecter des espèces très fortement dispersées ou diluées dans un grand volume d'un élément porteur.

(1) Dans le cas des capteurs chimiques pour la détection de gaz, on utilise un NEMS dont la surface peut être recouverte d'une couche de fonctionnalisation ayant une affinité chimique particulière envers certaines espèces à mesurer. Les particules correspondant à ces espèces sont absorbées dans cette couche ou, de manière homogène, sur toute la surface du NEMS.
Lorsque la concentration à mesurer devient très faible, la probabilité de capture des espèces par la surface extrêmement petite du NEMS devient très faible. On peut alors recourir à l'utilisation de réseaux (en anglais, *arrays*) qui sont collectivement adressés afin de bénéficier de la très bonne sensibilité des résonateurs. Mais on peut aussi utiliser une grande surface de capture. A ce sujet, on se reportera au document suivant :

I. Bargatin, E.B. Myers, J. S. Aldridge, C. Marcoux, P. Brianceau, L. Duraffourg, E. Colinet, S. Hentz, P. Andreucci, et M.L. Roukes, 2012, "Large-scale intégration of nanoelectromechanical systems for gas sensing applications", Nano letters 12 (3) (14 mars): 1269-74. doi:10.1021/nl2037479

et plus particulièrement à la figure 1 de ce document.

(2) Dans le cas des capteurs biologiques en milieu liquide, la problématique est la même que pour les capteurs chimiques, mais est encore plus aigüe : le dispositif résonant est alors placé dans le milieu liquide où les particules biologiques sont à détecter; et l'on peut être amené à les détecter de manière individuelle tant leur concentration peut être faible. De même, on peut être amené à utiliser des réseaux de résonateurs, individuellement adressés ou non, fonctionnalisés ou non. A ce sujet, on se reportera au document suivant :

S. Guillon, S. Salomon, F. Seichepine, D. Dezest, F. Mathieu, A. Bouchier, L. Mazenq, C. Thibault, C. Vieu, T. Leïchlé et L. Nicu, 2012, "Biological functionalization of massively parallel arrays of nanocantilevers using microcontact printing", Sensors and Actuators B: Chemical 161 (Janvier): 1135-1138. doi:10.1016/j.snb.2011.10.084

et plus particulièrement à la figure 1 de ce document.

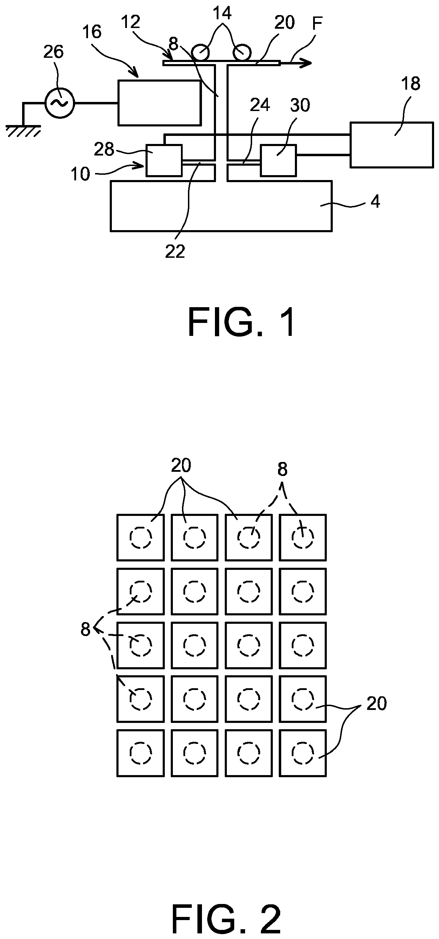

(3) Dans le cas des NEMS-MS, il s'agit de mesurer la masse de chaque particule (par exemple biologique) d'un mélange qui est initialement en phase liquide et que l'on vient projeter sur un NEMS sous vide, afin de remonter au spectre de masse du contenu du mélange, pour des applications biomédicales d'identification par exemple. Un tel système est représenté sur la figure 1 du document suivant auquel on se reportera :

A.K. Naik, M.S. Hanay, W. K. Hiebert, X. L. Feng et M. L. Roukes, 2009, "Towards single-molecule nanomechanical mass spectrometry", Nature Nanotechnology 4: 445-450. doi:10.1038/NNANO.2009.152.

Un problème majeur de ce système est l'utilisation d'un seul NEMS pour détecter les particules qui sont projetées sur sa surface : celle-ci peut valoir typiquement $1\mu m^2$ alors que le faisceau de particules, suivant le type de système d'injection, peut avoir une aire projetée de l'ordre de quelques millimètres carrés à quelques centimètres carrés.

On voit là encore l'aspect critique de l'utilisation de réseaux extrêmement denses de NEMS afin de maximiser la surface de capture. Mais dans le cas de la NEMS-MS, un problème additionnel se pose par rapport aux deux cas précédents : il s'agit ici de mesurer la masse d'une particule qui est ponctuelle ou du moins plus petite que la surface du résonateur et qui n'est pas répartie sur cette surface. Or, le décalage en fréquence induit par l'ajout d'une particule dépend non seulement de la masse mais aussi de la position d'arrivée de la particule sur le résonateur. Il est alors nécessaire de mesurer, en temps réel, plusieurs fréquences de résonance au lieu d'une seule. A ce sujet, on se reportera au document suivant :

S. Dohn, W. Svendsen, A. Boisen et O. Hansen, 2007, "Mass and position détermination of attached particles on cantilever based mass sensors", Review of Scientific Instruments 78: 103303. doi:10.1063/1.2804074.

Dans chacun des cas (1) à (3), les éléments (tridimensionnels) utilisés pour la détection des particules, tels que des poutres ou des cantilevers, ont une dimension (longueur) au moins 10 fois plus importante que les deux autres (et peuvent donc être considérés comme unidimensionnels) ; et cette dimension est dans le plan du substrat sur lequel est formé le dispositif considéré.

De plus, les moyens de transduction utilisés sont (a) soit dans le même plan que le dispositif, (b) soit dans un plan parallèle à celui du dispositif et espacé de ce dernier par des couches déposées sur le dispositif lui-même.

Au sujet du cas (a), on se reportera au document suivant :

E. Mile, G. Jourdan, I. Bargatin, S. Labarthe, C. Marcoux, P. Andreucci, S. Hentz, C. Kharrat, E. Colinet et L. Duraffourg, 2010, "In-plane nanoelectromechanical resonators based on silicon nanowire piezoresistive détection", Nanotechnology 21 (16) (23 avril): 165504. doi:10.1088/0957-4484/21/16/165504

et en particulier à la figure 1 de ce document.

Au sujet du cas (b), on se reportera au document suivant :

Mo Li, H.X. Tang et M. L. Roukes, 2007, "Ultra-sensitive NEMS-based cantilevers for sensing, scanned probe and very high-frequency applications", Nature nanotechnology 2 (2) (Février): 114-20. doi:10.1038/nnano.2006.208

et en particulier à la figure 1 de ce document. On pourra également se reporter au document suivant :

P. Ivaldi, J. Abergel, M. H. Matheny, L. G. Villanueva, R.B. Karabalin, M. L. Roukes, P. Andreucci, S. Hentz et E. Defaÿ, 2011, "50 nm thick AlN film-based piezoelectric cantilevers for gravimétrie détection", Journal of Micromechanics and Microengineering 21: 085023. doi:10.1088/0960-1317/21/8/085023

et en particulier à la figure 3 de ce document.

Il faut donc sortir les connexions dans le même plan que le dispositif lui-même.

Ces caractéristiques (éléments unidimensionnels dans le plan du substrat, nécessité de sortir les connexions dans le plan du dispositif) empêchent d'obtenir de bons rapports SA/SI, où SA représente la surface active c'est-à-dire la surface vibrante du MEMS ou du NEMS considéré, et SI représente la surface inactive c'est-à-dire la surface qui ne vibre pas. Ainsi, la surface de capture des éléments à détecter est extrêmement faible. Il est par exemple très difficile d'obtenir une densité de surface active qui soit supérieure à 1% avec ces caractéristiques.

La publication "Actuation of silicon pillar micromechanical resonators by Kelvin polarisation force" ( V. Toffoli et al Microelectronic Engineering 111, 2016, 1-6) divulgue un dispositif de détection micro-électromécanique ou nano-électromécanique réalisé en couche mince comprenant :

- un support comportant une face définissant un plan,
- au moins une poutre ayant des première et deuxième extrémités, qui est apte à se déplacer par rapport au support,
- des moyens optiques de détection du déplacement de la poutre qui sont externes au dispositif.

## EXPOSÉ DE L'INVENTION

La présente invention a pour but de remédier aux inconvénients précédents.

Pour ce faire, un dispositif de détection électromécanique conforme à l'invention est décrit dans la revendication 1.

Selon un mode de réalisation particulier du dispositif, objet de l'invention, les moyens de détection sont ancrés à la poutre et formés dans au moins une couche parallèle audit plan.

Selon un mode de réalisation préféré de l'invention, la propriété physique de la particule ou des particules est la masse. Mais l'invention peut également permettre, entre autres, la détection d'une contrainte, d'une force, d'une déformation de surface, lorsque la poutre est dans un mode de fonctionnement statique (sans actionnement ou avec un actionnement statique).

Le support peut être un substrat homogène ou hétérogène, en particulier un substrat comportant un empilement de couches, formant par exemple un circuit intégré.

Selon un mode de réalisation préféré de l'invention, une section de la zone d'accueil dans un premier plan, qui est parallèle audit plan, est supérieure à la section de la poutre dans un deuxième plan qui est également parallèle audit plan.

La zone d'accueil peut prendre différentes formes, notamment celle d'un plateau, d'une cuvette ou d'un ovoïde.

Selon un mode de réalisation préféré, le dispositif, objet de l'invention, comprend plus d'une poutre, à savoir un ensemble de poutres, qui est organisé en réseau (en anglais, *array*).

De préférence, la deuxième extrémité de la poutre est pourvue d'un plateau comportant une face plane qui est sensiblement perpendiculaire à la poutre et forme la zone d'accueil.

Selon un mode de réalisation particulier de l'invention, la poutre forme un résonateur dont la fréquence de résonance varie lorsque la zone d'accueil reçoit la ou les particules, et le dispositif comprend en outre des moyens d'actionnement de la poutre.

Ces moyens d'actionnement peuvent être choisis parmi les moyens d'actionnement électrostatiques, les moyens d'actionnement piézoélectriques, les moyens d'actionnement thermoélastiques et les moyens d'actionnement optiques.

Les moyens de détection du déplacement de la poutre sont choisis parmi les moyens de détection à jauges de contrainte piézorésistives, les moyens de détection capacitifs, les moyens de détection piézoélectriques.

Le dispositif, objet de l'invention, peut être pourvu de moyens de traitement du signal qui est fourni par les moyens de détection du déplacement de la poutre, ces moyens de traitement du signal étant prévus pour déterminer ladite propriété physique.

La présente invention concerne aussi un procédé de fabrication du dispositif, procédé selon lequel on fabrique la ou les poutres, de préférence sous une forme de type autonome (en anglais, *stand-alone*) ou cointégré, par une technologie de surface.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue en coupe schématique d'un dispositif unitaire, conforme à l'invention,
- la figure 2 est une vue de dessus schématique d'un dispositif conforme à l'invention, comportant plusieurs dispositifs unitaires,
- la figure 3 est une vue en perspective schématique d'un réseau de dispositifs unitaires, conformes à l'invention,
- la figure 4 est une autre vue en perspective schématique de ce réseau,
- la figure 5 est une vue en coupe schématique d'un autre dispositif unitaire, conforme à l'invention,
- la figure 6 est une vue schématique d'un microbolomètre,
- la figure 7 est une vue en coupe schématique d'un dispositif unitaire, conforme à l'invention, utilisant une détection capacitive,
- la figure 8 est une vue en coupe schématique d'un dispositif unitaire, conforme à l'invention, utilisant un actionnement et une détection piézoélectriques,
- la figure 9 est une variante de la figure 8,
- la figure 10 est une vue en coupe schématique d'un dispositif unitaire, conforme à l'invention, utilisant un actionnement thermoélastique,

- les figures 11A à 11K illustrent schématiquement des étapes d'un procédé de type autonome pour fabriquer un dispositif conforme à l'invention,
- les figures 12A à 12G illustrent schématiquement des étapes d'un autre procédé de type autonome pour fabriquer un dispositif conforme à l'invention, et
- les figures 13A à 13J illustrent schématiquement des étapes d'un procédé de type co-intégré pour fabriquer un dispositif conforme à l'invention.

## EXPOSÉ DÉTAILLÉ DE MODES DE RÉALISATION PARTICULIERS

La figure 1 est une vue en coupe schématique d'un exemple du dispositif de détection électromécanique, objet de l'invention. Dans cet exemple, il s'agit d'un dispositif unitaire 2 qui comprend :

- un substrat ou support 4, comportant une face qui définit un plan 6,
- une poutre 8 qui est apte à se déplacer par rapport au substrat 4, et
- des moyens 10 de détection du déplacement de la poutre 8, pour fournir un signal qui est fonction de ce déplacement.

Conformément à l'invention, la poutre 8 est ancrée au substrat 4 par une première extrémité et sensiblement perpendiculaire au plan 6. La deuxième extrémité de la poutre 8 comporte une zone d'accueil 12, pour recevoir une ou plusieurs particules 14 qui modifient le déplacement de la poutre. Et l'on détermine une propriété physique de la particule ou des particules 14 à partir du signal fourni par les moyens 10 de détection du déplacement.

On voit que la section de la zone d'accueil 12 dans un plan parallèle au plan 6 est supérieure à la section de la poutre 8 dans un plan parallèle au plan 6.

On précise que, dans l'exemple représenté sur la figure 1, la poutre 8 constitue un résonateur dont la fréquence de résonance varie lorsque la zone d'accueil 12 reçoit la ou les particules 14. Et le dispositif 2 comprend en outre des moyens 16 d'actionnement de la poutre 8.

Le dispositif représenté sur la figure 1 est en outre pourvu de moyens 18 de traitement du signal fourni par les moyens 10 de détection du déplacement de la poutre 8. Ces moyens 18 de traitement du signal sont prévus pour déterminer la propriété physique mentionnée plus haut.

A titre purement indicatif et nullement limitatif, le dispositif est un capteur chimique pour la détection d'un gaz. La zone d'accueil, que comporte la poutre et sur laquelle on reviendra par la suite, est recouverte d'une couche non représentée qui a une affinité chimique envers le gaz à détecter. Ainsi, dans ce cas, la propriété physique est la masse particulière des atomes ou des molécules du gaz que l'on veut détecter. La détection de la masse de la particule ou des particules absorbées par la zone d'accueil peut si besoin est permettre aussi de déterminer la concentration du gaz analysé.

Certes la zone d'accueil pourrait être constituée par la surface libre de la deuxième extrémité de la poutre 8. Toutefois, dans l'exemple représenté sur la figure 1, la deuxième extrémité de la poutre 8 est pourvue d'un plateau 20. Ce plateau comporte une face plane qui est sensiblement perpendiculaire à la poutre 8 et constitue la zone d'accueil 12. On augmente ainsi la surface de capture du gaz. La taille du plateau 20 est choisie en fonction de la détection envisagée. Sur la figure 1, la flèche F représente la direction de déplacement du plateau 20.

Comme on le voit sur la figure 1, les moyens de détection 10 sont situés entre le plateau 20 et le substrat 4. Et il en est de même pour les moyens d'actionnement 16.

En fait, pour avoir une surface de capture convenable, on n'utilise pas un dispositif unitaire : on utilise un dispositif conforme à l'invention, comprenant plus d'une poutre, à savoir un ensemble de poutres qui est organisé en réseau. Ceci est schématiquement illustré par la figure 2.

Cette figure 2 est une vue de dessus d'un tel dispositif. On y voit le réseau de poutres 8 qui sont respectivement pourvues de plateaux 20, perpendiculaires à la surface du substrat (non représenté) du dispositif. Le réseau de poutres et de plateaux ainsi constitué permet de recouvrir au maximum la surface du substrat.

Les moyens de détection et les moyens de déplacement (non représentés), qui sont respectivement associés aux poutres du réseau, sont encore compris entre le substrat et les plateaux correspondants 20.

En fait, dans ce mode de réalisation particulier, on a découpé la surface du substrat en «pixels» élémentaires de capture, ayant une très bonne densité de couverture, et l'on a placé tout ce qui ne participe pas de la surface de capture ainsi constituée (en particulier les moyens de détection, les connexions et les contacts) sous les pixels considérés.

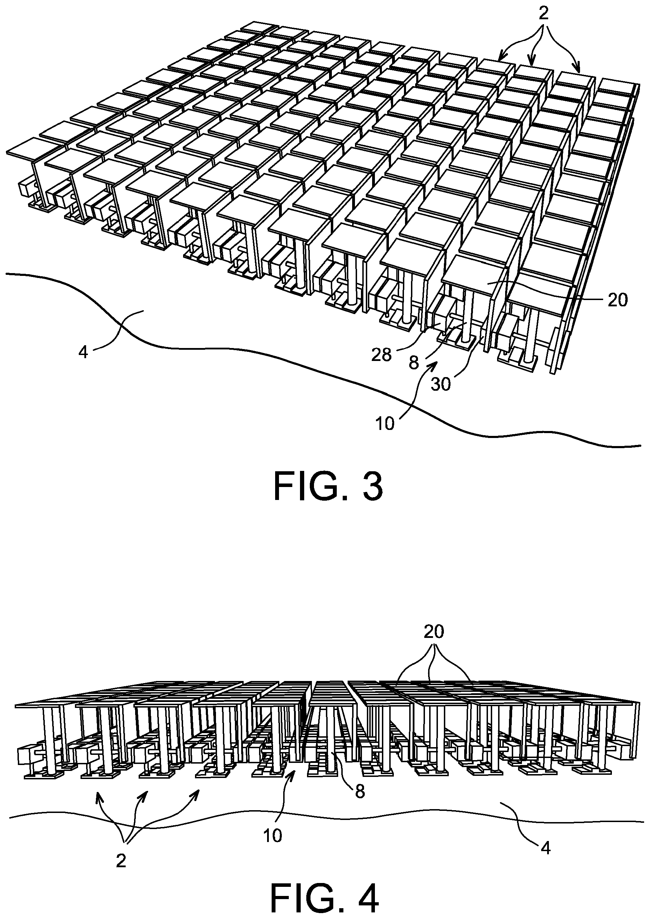

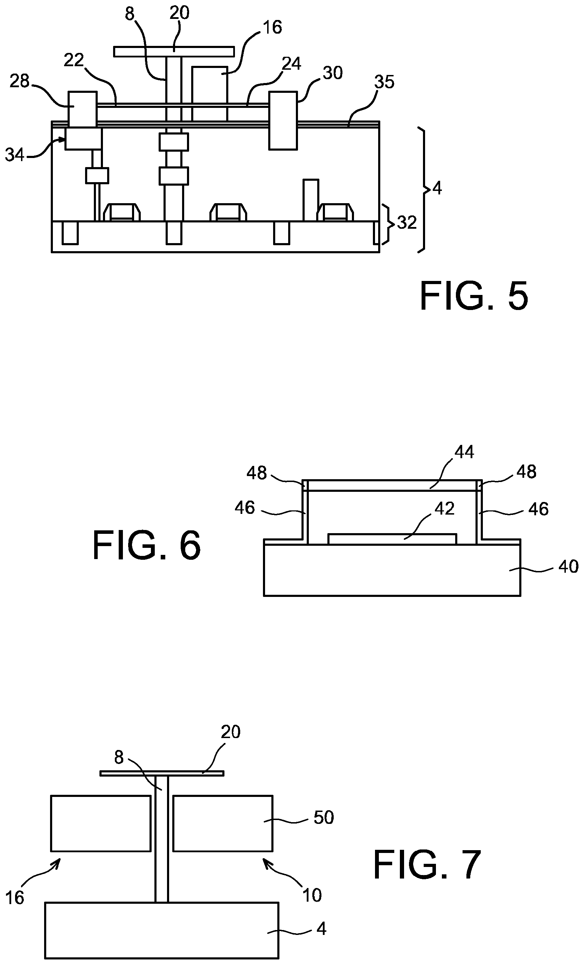

Les figures 3 et 4 sont des vues schématiques en perspective d'un réseau de dispositifs unitaires 2, conformes à l'invention. On a représenté les poutres 8, les moyens de détection 10 et les plateaux 20 respectifs des dispositifs unitaires 2. Les autres références qui apparaissent sur la figure 3 seront explicitées par la suite en faisant référence à la figure 5.

Précisons dès à présent que cette figure est un schéma de principe représentant un exemple de dispositif de détection et son circuit électronique élémentaire 32, comprenant par exemple des transistors CMOS. Ce circuit 32 permet l'adressage et éventuellement l'amplification du signal issu des moyens de détection. On n'a pas représenté sur cette figure 5 les niveaux d'interconnexions du circuit 32, qui peuvent être réalisés entre les transistors et les poutres du dispositif. Ces niveaux d'interconnexions sont nécessaires pour accéder aux différentes électrodes des transistors et des moyens de détections et d'actionnement.

Dans les exemples représentés sur les figures 1 à 4, les moyens d'actionnement 16 sont de type électrostatique et les moyens de détection 10 comprennent des jauges piézorésistives 22 et 24 en silicium ou en métal ou en graphène ou en nanotubes de carbone, de part et d'autre de la poutre correspondante 8. Mais tout type de détection (transduction) peut-être envisagé, si tant est qu'il soit réalisable en pratique.

Sur la figure 1, on voit également une source de tension alternative 26 pour porter l'électrode constituant les moyens d'actionnement 16.

Sur la figure 1, on voit en outre les ancrages respectifs 28 et 30 des jauges 22 et 24. Ces ancrages sont électriquement conducteurs et rendus rigidement solidaires du substrat 4 par des moyens non représentés. Les moyens de traitement 18 récupèrent les signaux fournis par les moyens de détection 10 par l'intermédiaire des ancrages 28 et 30.

Les moyens d'actionnement peuvent être électrostatiques (comme on vient de le voir) ou piézoélectriques ou encore thermoélastiques ou même optiques. Et les moyens de détection peuvent être également des moyens de détection capacitifs, ou des moyens de détection piézorésistifs, avec des jauges en silicium ou des jauges métalliques (comme on l'a vu), ou des moyens de détection piézoélectriques ou dans un exemple qui ne fait pas partie de la présente invention, des moyens de détection optiques. On reviendra sur cela dans la description des figures 7 à 10.

Pour effectuer les connexions électriques aux dispositifs unitaires, il faut «tirer» des lignes conductrices, par exemple en métal, jusqu'aux niveaux inférieurs d'interconnexions utilisés par la technologie CMOS. On peut donc également envisager de co-intégrer ces dispositifs unitaires avec des circuits électroniques CMOS plus ou moins élémentaires au niveau de chaque pixel, tous ces circuits étant reliés à un circuit électronique de lecture global, disposé à la périphérie du réseau de dispositifs unitaires. On peut donc envisager que chaque dispositif unitaire soit en partie ou entièrement réalisé dans ou au-dessus des niveaux d'interconnexions, appelés « back-end » du CMOS, et soit donc réalisé en métal.

Dans le cas où ces dispositifs sont réalisés au-dessus des niveaux d'interconnexions classiques du CMOS, on parlera par exemple de technologie de capteur au-dessus du circuit (dit « above-IC »). Dans le cas où ces dispositifs sont réalisés dans ou entre les niveaux d'interconnexions, on parlera par exemple de technologie co-intégrée. Cela signifie que des éléments classiques de la technologie CMOS sont réalisés en même temps que les éléments du capteur, par exemple dans le « back-end ».

Revenons sur la figure 5. Elle illustre schématiquement un exemple de dispositif unitaire en technologie « above-IC ». Le réseau représenté sur les figures 3 et 4 comprend un grand nombre de dispositifs de ce genre.

On voit la poutre 8 qui repose sur le substrat 4, le plateau 20 dont est pourvue la poutre 8, les jauges piézorésistives 22 et 24 qui sont par exemple en silicium dopé ou métalliques, dans le « back-end » du CMOS au-dessus du substrat 4, l'électrode 16 pour l'actionnement électrostatique, également au-dessus du substrat 4, et un circuit électronique élémentaire 32 enterré dans ce substrat 4 et formé par un ensemble de transistors par exemple de type CMOS. Dans le cas de jauges situées au-dessus du CMOS 32, lesdites jauges peuvent être reportées par la technique dite « *wafer bonding* » ou déposées.

On voit aussi les ancrages 28 et 30. Ces ancrages 28 et 30 sont reliées au circuit électronique élémentaire 32 par l'intermédiaire de niveaux d'interconnexions inférieures 34. Les liaisons entre les divers éléments ne sont pas toutes visibles sur la vue en coupe schématique de la figure 5. On précise également que, sur cette figure 5, l'électrode 16 se situe derrière la jauge 24 : il n'y a pas d'intersection physique entre cette électrode 16 et la jauge 24.

Sur la figure 5, la référence 35 désigne une couche d'arrêt inférieure, utilisée pour la fabrication du dispositif représenté sur cette figure.

Revenons sur la problématique de la densité de surface active. Cette problématique est similaire à celle qui concerne les microbolomètres. Ces derniers sont des capteurs densément distribués sur une surface afin d'absorber des rayonnements infrarouges. Toutefois, le concept de microbolomètre est très différent de la présente invention, et se rapproche de l'art antérieur, plus particulièrement de la figure 1 de l'article de Mo Li et al. (déjà cité) et de la figure 3 de l'article de P. Ivaldi et al. (déjà cité).

Dans un microbolomètre, les moyens de transduction (lecture de la résistance) et les contacts ne sont pas en - dessous du dispositif, mais au-dessus de celui-ci et dans un plan qui lui est parallèle. De plus, les structures utilisées sont membranaires et non pas unidimensionnelles.

Ceci est illustré par la figure 6 qui montre le schéma de principe d'un microbolomètre. On voit un substrat en silicium 40, comportant un circuit de lecture (non représenté), un réflecteur 42 sur le substrat, une structure membranaire (à deux dimensions) 44 qui absorbe le rayonnement infrarouge, à 2 $\mu$m du substrat dans l'exemple représenté, et des électrodes 46, reliées à la structure 44 par des contacts en or 48.

La figure 7 est une vue en coupe schématique d'un dispositif unitaire, conforme à l'invention, dans lequel les moyens de détection 10 sont capacitifs. On voit le substrat 4, la poutre verticale 8, le plateau (horizontal) 20, l'électrode 16 pour l'actionnement électrostatique de la poutre 8 et une électrode 50 pour la détection capacitive du déplacement de la poutre 8. Cette électrode 50 est reliée à des moyens non représentés, prévus pour traiter les signaux fournis par l'électrode 50 lors du déplacement de la poutre 8.

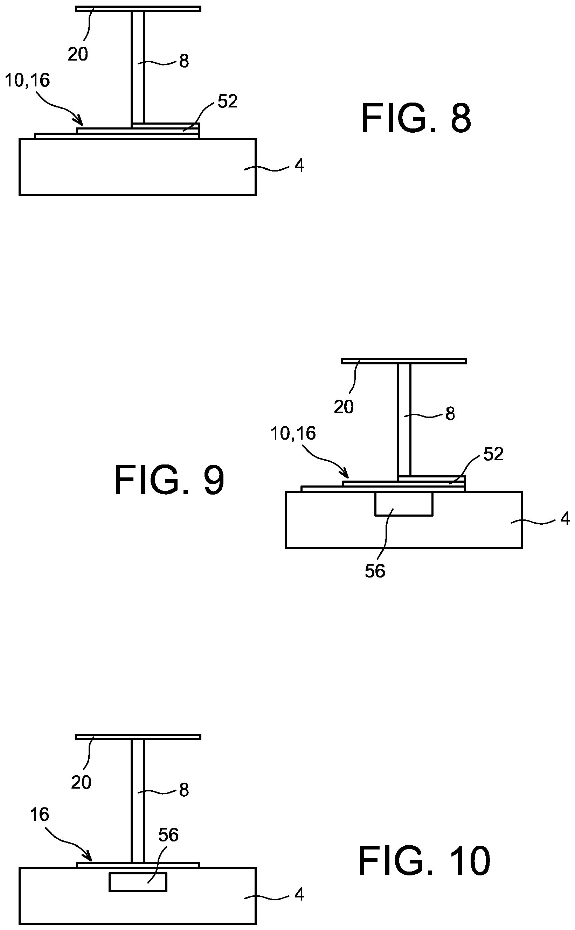

La figure 8 est une vue en coupe schématique d'un dispositif unitaire conforme à l'invention, pourvu d'un actionnement et d'une détection piézoélectriques.

On voit encore le substrat 4, la poutre 8 et le plateau 20. Dans cet exemple, les moyens de détection 10 et les moyens d'actionnement 16 sont constitués par un même empilement (ou stack) piézoélectrique. Ce dernier est classiquement constitué par une couche piézoélectrique comprise entre deux couches électriquement conductrices.

Il faut prendre soin de concevoir la forme de l'empilement piézoélectrique afin que le champ de contrainte, produit par la flexion du dispositif, n'auto-annule pas les charges collectées entre les deux électrodes de l'empilement. Par exemple, comme on l'a représenté par la figure 8, on peut dissymétriser l'empilement afin que les contraintes positives d'un côté du dispositif ne s'annulent pas avec les contraintes négatives. On peut également «creuser» le substrat afin de récupérer une plus grand contrainte dans l'empilement 52. Ceci est schématiquement illustré par la figure 9 où l'on voit qu'un creux 54 est prévu dans le substrat 4 sous l'empilement 52.

La figure 10 est une vue en coupe schématique d'un dispositif unitaire, conforme à l'invention, pourvu de moyens d' actionnement thermoélastiques. Les moyens de détection ne sont pas représentés.

On voit encore le substrat 4, la poutre 8 et le plateau 20. Dans cet exemple, les moyens d'actionnement 16 comprennent une couche métallique 56, formée sur le substrat 4. La poutre 8 repose sur ce dernier par l'intermédiaire de la couche 56.

Comme on le voit, une cavité 58 est prévue dans le substrat 4, sous la couche 56 pour - de même que pour la figure 9 - maximiser la contrainte et/ou le déplacement obtenus.

La couche métallique 56 est chauffée grâce au passage d'un courant, ce qui nécessite des connexions électriques (non représentées). La dilatation différentielle entre le métal de la couche 56 et le matériau du substrat 4 provoque un effet bilame et donc l'actionnement du dispositif.

Dans les exemples de l'invention, que l'on a donné jusqu'à présent, le dispositif était résonant. Mais l'invention n'est pas limitée à ce cas : un dispositif conforme à l'invention peut aussi être non résonant. On parle alors de détection en mode statique. Un tel dispositif permet la détection d'une force, par exemple une force cellulaire.

Cela consiste à mesurer la force mécanique qu'une cellule peut exercer sur son environnement ou sur elle-même, en fonction des conditions de cet environnement ou des espèces chimiques en présence, dans un but de compréhension de mécanismes fondamentaux ou dans un but thérapeutique.

A ce sujet, on se reportera au document suivant :
US 2010/0041091, Axelrod et al., « Microfluidic embedded polymer NEMS force sensors » et notamment à la figure 1 de ce document.

Il s'agit de « placer » une cellule vivante (qui est donc dans un milieu fluide) entre un support et un dispositif NEMS dont une propriété, par exemple la résistance, change en fonction de la force ou du déplacement imposé par la cellule au dispositif.

L'un des problèmes majeurs, posés par cette technique, avant son utilisation en pratique dans un cadre industriel, provient de la difficulté de placer une cellule à l'endroit souhaité : on fait passer un fluide contenant les cellules sur la surface d'un NEMS dans l'espoir qu'une cellule s'accroche au bon endroit.

La présente invention permet d'augmenter de plusieurs ordres de grandeur cette probabilité de capture : il suffit qu'une cellule recouvre au moins en partie les plateaux de deux dispositifs unitaires voisins, conformes à l'invention. Grâce aux mêmes moyens de lecture du déplacement déjà décrits, on peut remonter à la force exercée par la cellule.

Un exemple de dispositif unitaire non résonant, conforme à l'invention, est identique à l'exemple illustré par la figure 1 mais privé des moyens d'actionnement 16 (et de la source 26). Le déplacement de la poutre 8 est alors provoqué par la cellule dont il vient d'être question.

Comme on l'a vu, dans ce cas, on utilise plutôt un dispositif non unitaire, comportant plusieurs dispositifs unitaires. Et, en vue de dessus, un tel dispositif correspond à la figure 2.

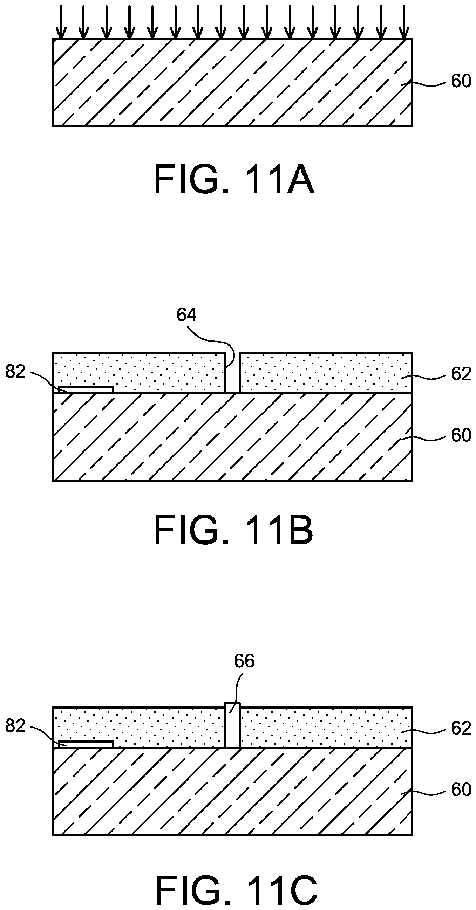

On donne ci-après, en faisant référence aux figures 11A à 11K, un exemple de fabrication d'un dispositif unitaire conforme à l'invention. Il s'agit d'un procédé de type autonome, encore appelé procédé de type stand-alone. Il utilise une technologie de surface.

On utilise un substrat en silicium 60 et l'on effectue un dopage pleine plaque de celui-ci, par exemple avec une concentration de dopant de $10^{19}$ atomes par centimètre cube (figure 11A).

Sur le substrat, on forme des contacts tels que le contact 82, sur lesquels on reviendra par la suite, on dépose une couche 62 en $SiO_2$ dont l'épaisseur vaut par exemple 1 $\mu$m, et l'on effectue une lithographie de cette couche pour faire apparaître le motif 64 du NEMS que comporte le dispositif (figure 11B).

Au niveau du motif ainsi obtenu, on dépose, sélectivement par rapport à SiOz, du silicium 64 par épitaxie, par exemple sur une hauteur de 1 $\mu$m (figure 11C).

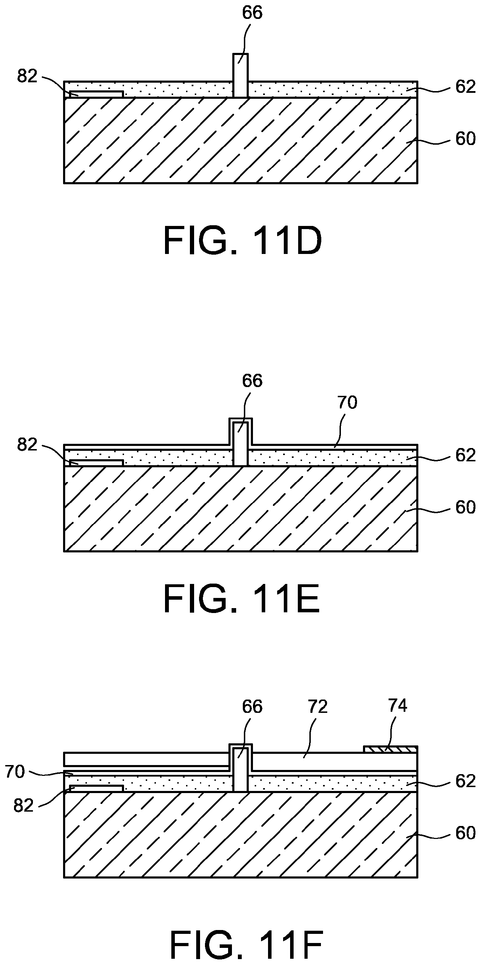

On élimine la couche 62 sur une épaisseur permettant de faire apparaître le silicium déposé 66, correspondant à la poutre du dispositif (figure 11D).

On dépose une couche 70 de SiOz, de 200 nm d'épaisseur par exemple, sur la structure ainsi obtenue (figure 11E). Au lieu d'une telle couche de SiOz, on peut utiliser une autre couche sacrificielle, faite d'un oxyde peu dense par exemple.

Au-dessus de la couche 70, on dépose une couche 72 de polysilicium par LPCVD ou bien un matériau conducteur, par exemple AlSi, sur une épaisseur de 1 μm par exemple. On effectue ensuite un dépôt conducteur (par exemple en AlSi) pour obtenir les contacts 74 correspondants; et l'on forme ces contacts par lithographie puis gravure (figure 11F).

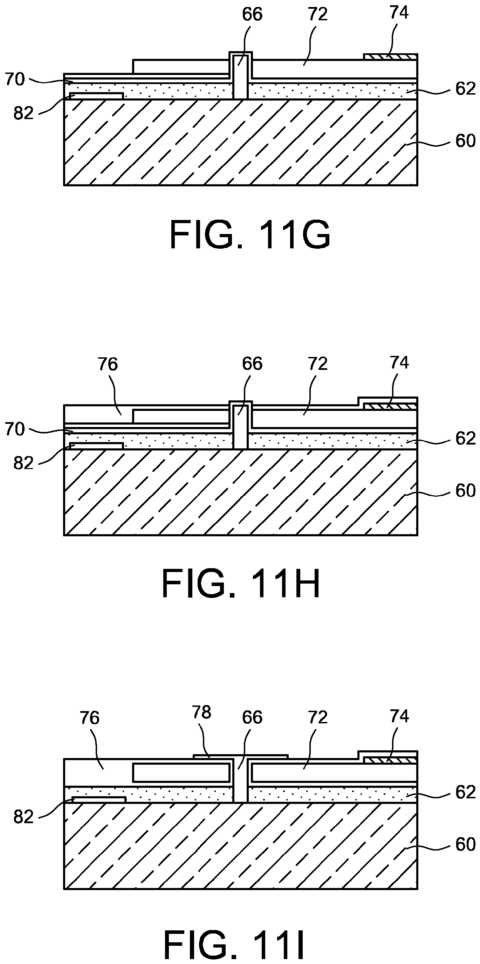

On élimine une partie de la couche 72 par lithographie et gravure (figure 11G).

On dépose une couche 76 de silice sur la structure obtenue, par exemple plus de 2 μm de $SiO_2$, puis on planarise par CMP c'est-à-dire par un procédé de polissage mécano-chimique (figure 11H).

On dépose ensuite une couche de polysilicium ou de métal, de 20 nm d'épaisseur par exemple, puis on forme le plateau 78 du dispositif par lithographie et gravure (figure 11I).

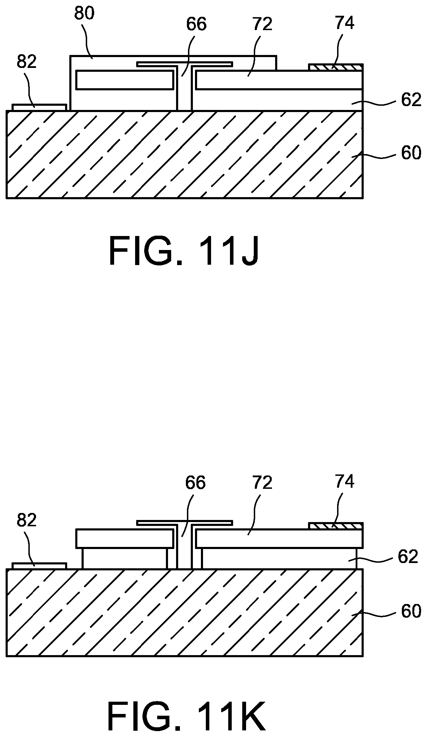

Ensuite, on dépose une couche de protection 80 en silice sur la structure obtenue, on élimine localement cette couche 80, par des photolithographies et gravures successives, pour refaire apparaître les contacts 74 ainsi que d'autres contacts, tels que le contact 82, qui résultaient d'un premier dépôt-litho-gravure d'une couche de métal au début du procédé (figure 11J).

Ensuite, on élimine en partie les couches de silice par gravure, au moyen d'acide fluorhydrique HF, pour libérer la poutre munie du plateau (figure 11K).

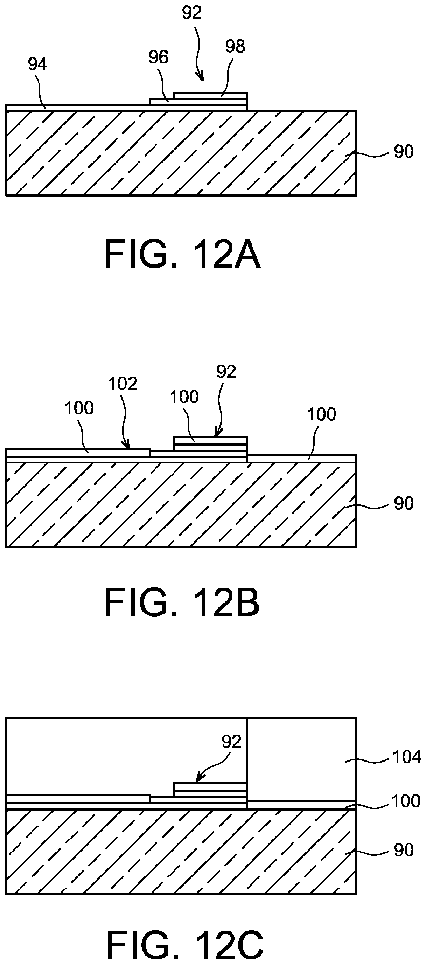

On donne ci-après un autre exemple de procédé de type autonome, permettant de fabriquer un dispositif unitaire conforme à l'invention, en faisant référence aux figures 12A à 12G.

On utilise un substrat 90 en silicium et l'on forme un empilement piézoélectrique dissymétrique 92 sur le substrat 90. Pour ce faire, on y dépose une couche par exemple de molybdène 94, on effectue une lithographie de celle-ci, on dépose une couche 96 par exemple en AlN sur la couche 94, on effectue une lithographie de celle-ci, on dépose une couche par exemple de molybdène 98 sur la couche 96 et l'on effectue une lithographie de cette couche 98 (figure 12A).

Ensuite, on dépose une couche 100 par exemple de $SiO_2$, de 750 nm d'épaisseur par exemple, sur la structure obtenue. On effectue une lithographie pour faire apparaître le motif 102 du NEMS que comporte le dispositif (figure 12B).

Sur la structure obtenue, on dépose une couche 104 par exemple en oxyde de silicium (figure 12C).

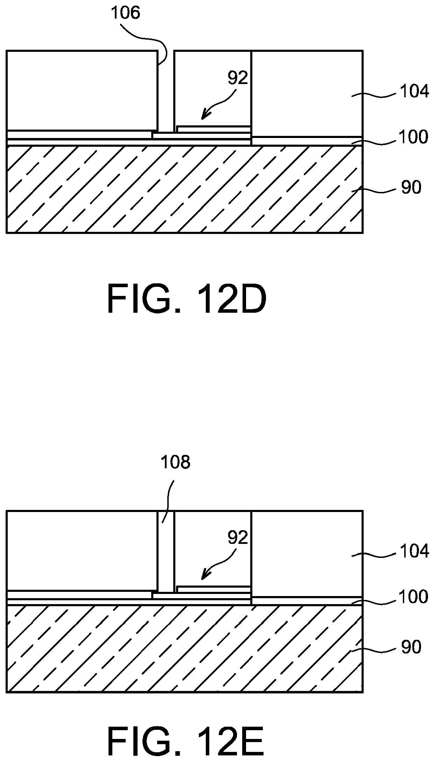

Ensuite, on grave la couche 104 au niveau du motif 102 précédemment formé pour définir l'emplacement 106 de la poutre du dispositif (figure 12D).

Puis, pour former cette poutre, on dépose, à cet emplacement, par exemple du polysilicium 108 jusqu'à la surface de la couche 104 (figure 12E).

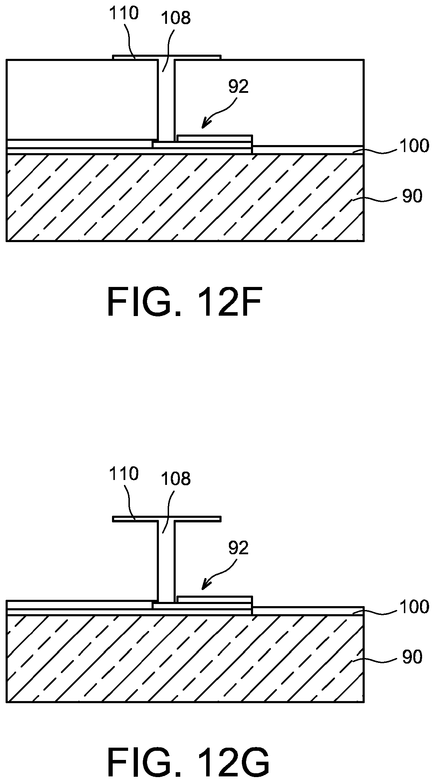

On dépose du polysilicium par LPCVD, sur une épaisseur de 20 nm par exemple, et l'on procède à une lithographie de ce polysilicium pour former le plateau 110 du dispositif (figure 12F).

Puis on libère la poutre munie de son plateau par une gravure humide de la structure résultante, à l'aide par exemple d'acide fluorhydrique (figure 12G).

Des dispositifs conformes à l'invention peuvent également être réalisés par un procédé co-intégré ou « above IC » comme le montre la figure 5. Dans ce cas, la contrainte principale résulte de l'utilisation de procédés thermiques froids, c'est-à-dire de procédés mis en oeuvre à des températures inférieures à 500°C, voire inférieures à 300°C, afin de préserver l'intégrité notamment de circuit CMOS et de ses interconnexions.

On pourra ainsi utiliser un substrat SOI comportant une couche supérieure en silicium, préalablement dopée et activée, avant un collage moléculaire froid au-dessus du CMOS. Pour ce faire, on pourra utiliser le procédé décrit dans le document suivant :
FR 2 961 016, Circuit intégré à dispositif de type FET sans jonction et à déplétion, invention de T. Ernst et al.

Ce procédé utilise notamment une couche d'arrêt inférieure par exemple de HfOz ou de BN ou encore de SiN qui est représentée sur la figure 5. L'épitaxie devra alors être remplacée par des dépôts effectués à froid, par exemple des dépôts conducteurs de AlSi ou de W, suivis d'un polissage mécano-chimique (CMP) pour ne garder le matériau conducteur, que dans les trous formés dans l'oxyde (SiOz). On pourra remplacer également les dépôts de polysilicium par des dépôts métalliques ou des dépôts de silicium amorphe, éventuellement dopé *in situ*. Pour obtenir du polysilicium à partir d'un dépôt à basse température de silicium amorphe, on peut également utiliser un recuit laser du silicium amorphe pour limiter l'échauffement localement.

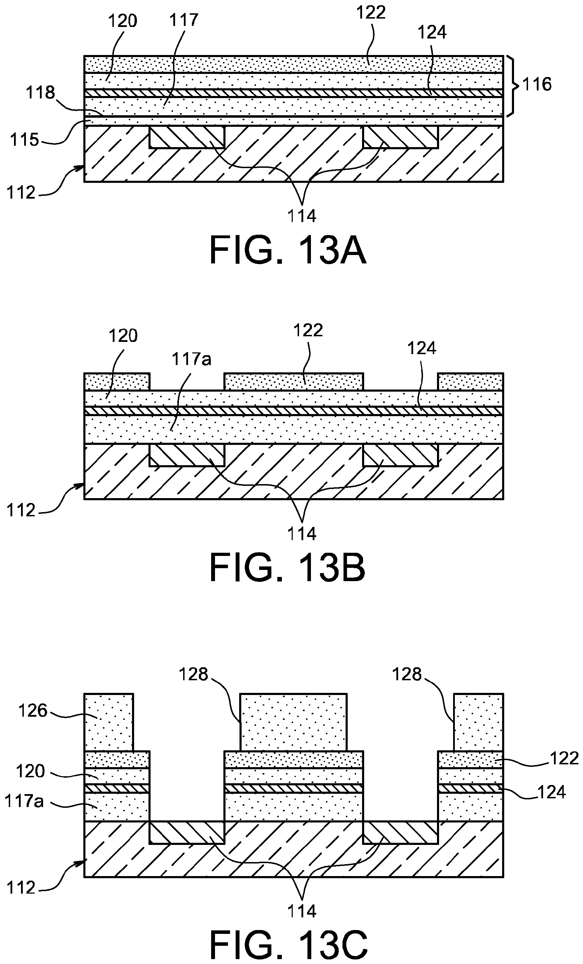

Les figures 13A à 13J illustrent schématiquement des étapes d'un tel procédé (après report sur CMOS), permettant de fabriquer un dispositif conforme à l'invention.

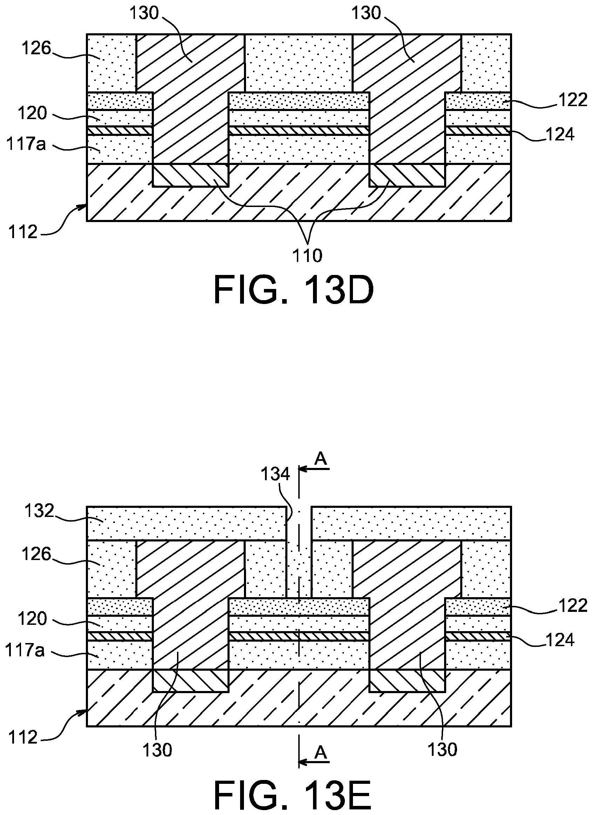

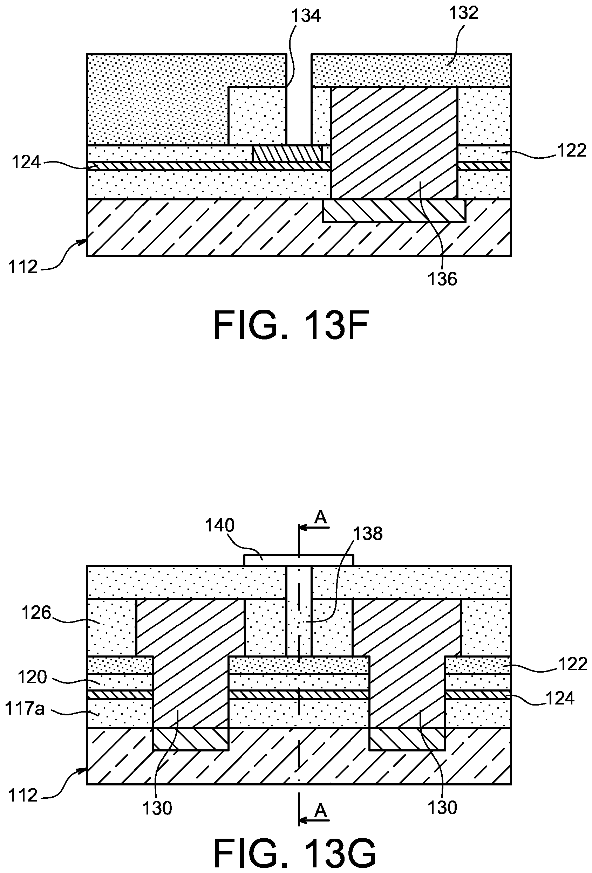

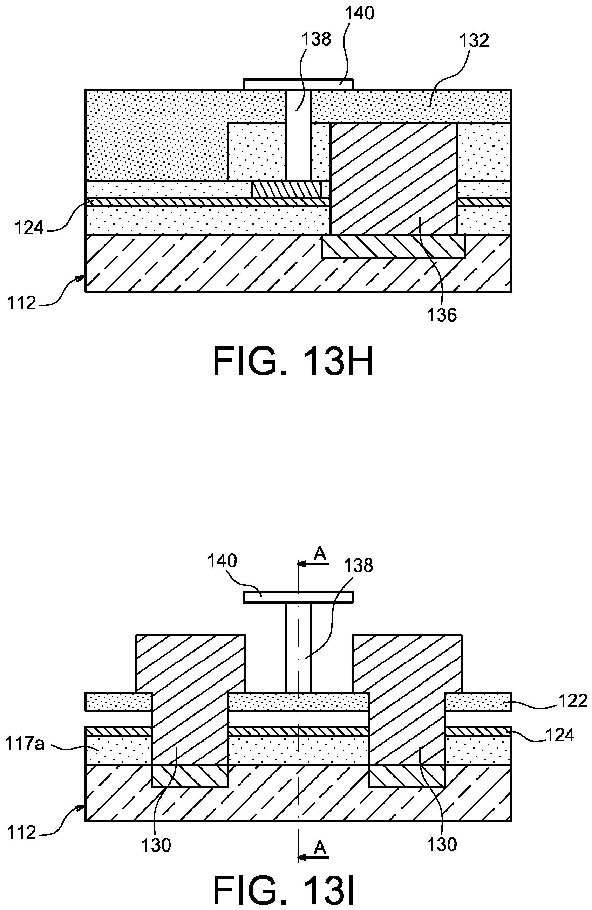

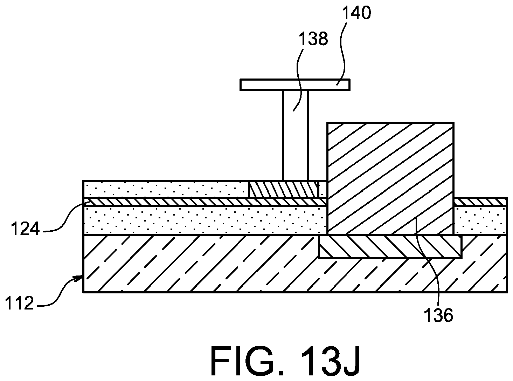

Précisons dès maintenant que les étapes successives du procédé sont schématiquement illustrées par les vues en coupe des figures 13A à 13E, 13G et 13I, tandis que les figures 13F, 13H et 13J sont respectivement les coupes AA des figures 13E, 13G et 13I.

La figure 13A montre une plaque CMOS 112. Seul son dernier niveau « en métal » est représenté. La référence 114 désigne les zones en métal de cette plaque 112 et la référence 115 désigne une couche diélectrique par exemple en silice, permettant la réalisation d'un collage oxyde /oxyde.

On voit aussi la structure 116 qui a été reportée sur la plaque CMOS par collage moléculaire froid. L'interface de collage a la référence 118. Cette structure 116 peut être un substrat de type SOI, comportant une couche de collage 117 d'oxyde, de 200 nm d'épaisseur par exemple, une couche d'arrêt 124 de 10 nm à 100nm d'épaisseur par exemple, un oxyde enterré 120, de 400 nm d'épaisseur par exemple, surmonté d'une couche supérieure 122 en silicium, de 50 nm d'épaisseur par exemple, préalablement dopée au bore et activée. La couche d'oxyde 117 permet le collage moléculaire avec la couche 115. La réunion des couches 115 et 117 a la référence 117a sur la figure 13B et les suivantes.

Plus généralement, à la place de cette couche de silicium, on pourrait utiliser une couche en matériau piézoélectrique.

On voit aussi la couche d'arrêt 124 entre l'oxyde enterré 120 et la couche de collage 117; elle peut être par exemple en SiN, en HfOz ou en BN.

On utilise par exemple une couche d'arrêt en BN de 50 nm d'épaisseur.

La structure 116 peut être également obtenue par des dépôts successifs de couches appropriées.

Ensuite (figure 13B), on effectue une photolithographie puis une gravure de la couche supérieure 122 en silicium au niveau des zones métalliques 114 et l'on élimine les parties ainsi gravées.

On dépose ensuite une couche d'isolation 126 en silice, dont l'épaisseur vaut par exemple 400 nm, sur la couche supérieure 122 (figure 13C). On effectue une nouvelle photolithographie puis une gravure à travers la couche 126, jusqu'aux zones métalliques 114, au niveau des zones gravées de la couche 122 et l'on élimine les parties ainsi gravées à travers la couche 126, d'où les ouvertures 128. Cette seconde photolithographie permet d'avoir une ouverture plus large au niveau de la couche 126, par rapport à celle qui a été obtenue par la lithographie précédente (voir les ouvertures dans la couche 122) et ainsi de diminuer la résistance de contact de la reprise de contact ultérieure entre le dépôt 130 et la couche 122 (voir la figure 13D et les suivantes).

Ensuite (figure 13D), on effectue un décapage ionique de la structure ainsi obtenue. Puis on effectue un dépôt épais par exemple fait de AlSi ou d'un multidépôts Ti/TiN +W dans les ouvertures 128, pour obtenir les dépôts ou électrodes 130, suivi par un polissage mécano-chimique du AlSi ou du Ti/TiN +W ainsi déposé.

On dépose ensuite une couche 132 de silice sur la structure ainsi obtenue (figure 13E). Puis on forme une ouverture 134, qui est sensiblement équidistante des électrodes 130 dans l'exemple décrit, par photolithographie et gravure, jusqu'à la couche supérieure 122 en silicium. Cette ouverture 134 est destinée à la formation ultérieure d'une poutre du genre de la poutre 8 de la figure 5.

La figure 13F montre la structure résultante, observée selon la coupe AA de la figure 13E, telle que définie plus haut. On y voit une électrode 136 faite de AlSi ou du Ti/TiN +W, qui a été formée en même temps que les électrodes 130, selon les mêmes étapes de fabrication. Cette électrode 136 est destinée à l'actionnement de la poutre que l'on va former dans l'ouverture 134.

La figure 13G illustre l'étape de formation de cette poutre 138, et du plateau 140 dont elle est pourvue. La figure 13H montre l'ensemble poutre-plateau selon la coupe AA de la figure 13G. Cet ensemble est obtenu par un dépôt de AlSi ou de HfO2 ou de tout autre matériau équivalent, tel que le BN par exemple, suivi par une gravure pour définir le plateau 140.

Ensuite (figure 13I), on libère la poutre 138, munie de son plateau 140, par une gravure de la structure résultante à l'aide d'acide fluorhydrique à l'état liquide ou vapeur. La figure 13J illustre cette libération selon la coupe AA de la figure 13I.

Revenons sur le dispositif, objet de l'invention, et plus précisément sur les moyens de détection de déplacement de poutre. On précise, ci-après, l'intérêt d'avoir des moyens de détection de déplacement qui sont intégrés, contrairement à des moyens de détection de déplacement connus dans l'état de l'art.

Expliquons l'intérêt et la difficulté à produire un NEMS vertical avec des moyens de détection intégrés (par opposition à cet état de l'art où l'on utilise une détection optique, externe à une puce :

L'intégration des moyens de transduction, classiquement électriques (actionnement et/ou détection), en couches minces, est très souvent recherché et est donc un problème classique en soi ; il permet de diminuer fortement l'encombrement du dispositif final, son coût et sa consommation, et améliore dans certains cas la précision de mesure. Par ailleurs, il peut être très difficile d'adresser un grand nombre de résonateurs sur la puce avec un moyen externe, comme c'est le cas pour un réseau de résonateurs, utile afin de couvrir une grande section de capture. Dans ce cas, une transduction intégrée est une solution de ce problème.

Dans le cas d'un dispositif vertical, réalisé en couches minces, il est encore moins évident d'intégrer les moyens de détection électrique dans le procédé de réalisation, en particulier aux petites dimensions nanométriques. En effet, le dispositif est alors réalisé par couches successives et la gravure de celles-ci ainsi que la bonne réalisation de la structure mécanique nécessitent de trouver des moyens d'éviter des désalignements entre niveaux trop importants, typiquement du même ordre de grandeur que les dimensions latérales du dispositif. Les moyens de détection mesurant un déplacement ou une contrainte, leur bon fonctionnement repose sur des positionnements très bien contrôlés entre la structure mécanique et ces moyens. De plus, dans le cas où l'on souhaite une surface « active » (pour la détection des particules) au-dessus et recouvrant les moyens de détection, ces derniers doivent être bien moins encombrants que le résonateur lui-même, ce qui limite fortement les possibilités.

**Revendications**

1. Dispositif de détection micro-électromécanique ou nano-électromécanique réalisé en couche mince, comprenant :

    - un support (4) comportant une face définissant un plan (6),
    - au moins une poutre (8) ayant des première et deuxième extrémités, qui est apte à se déplacer par rapport au support (4), et

- des moyens (10) de détection du déplacement de la poutre, adaptés pour fournir un signal qui est fonction du déplacement,

dans lequel la poutre (8) est ancrée au support (4) par la première extrémité, et perpendiculaire audit plan (6), et la deuxième extrémité de la poutre comporte au moins une zone d'accueil (12), apte à recevoir une ou plusieurs particules (14) qui sont aptes à provoquer ou modifier le déplacement de la poutre, en vue de déterminer au moins une propriété physique de la particule ou des particules à partir du signal fourni par les moyens (10) de détection du déplacement,

le dispositif de détection étant **caractérisé en ce que**:

les moyens de détection sont situés entre la zone d'accueil (12) et le support (4),

- les moyens (10) de détection sont formés par une technique de dépôt en couche mince et sont intégrés au dispositif de détection, et
- les moyens (10) de détection sont choisis parmi les moyens de détection à jauges de contrainte piézorésistives, les moyens de détection capacitifs et les moyens de détection piézoélectriques.

2. Dispositif selon la revendication 1, dans lequel les moyens (10) de détection sont ancrés à la poutre et formés dans au moins une couche parallèle audit plan (6).

3. Dispositif selon l'une quelconque des revendications 1 et 2, dans lequel une section de la zone d'accueil (12) dans un premier plan, qui est parallèle audit plan (6), est supérieure à la section de la poutre (8) dans un deuxième plan qui est également parallèle audit plan (6).

4. Dispositif selon l'une quelconque des revendications 1 à 3, comprenant plus d'une poutre, à savoir un ensemble de poutres (8), qui est organisé en réseau.

5. Dispositif selon l'une quelconque des revendications 1 à 4, dans lequel la deuxième extrémité de la poutre (8) est pourvue d'un plateau (20) comportant une face plane qui est sensiblement perpendiculaire à la poutre et forme la zone d'accueil (12).

6. Dispositif selon l'une quelconque des revendications 1 à 5, dans lequel la poutre (8) forme un résonateur dont la fréquence de résonance varie lorsque la zone d'accueil (12) reçoit la ou les particules (14), et le dispositif comprend en outre des moyens (16) d'actionnement de la poutre.

7. Dispositif selon la revendication 6, dans lequel les moyens (16) d'actionnement sont choisis parmi les moyens d'actionnement électrostatiques, les moyens d'actionnement piézoélectriques, les moyens d'actionnement thermoélastiques et les moyens d'actionnement optiques.

8. Dispositif selon l'une des revendications précédentes, dans lequel les jauges de contrainte piézorésistives sont choisies parmi les jauges en silicium, les jauges en métal, les jauges en graphène et les jauges en nanotubes de carbone.

9. Dispositif selon l'une quelconque des revendications précédentes, pourvu de moyens (18) de traitement du signal qui est fourni par les moyens (10) de détection du déplacement de la poutre (8), les moyens (18) de traitement du signal étant prévus pour déterminer ladite propriété physique.

**Patentansprüche**

1. Mikroelektromechanische oder nanoelektromechanische Erfassungsvorrichtung, hergestellt aus einer Dünnschicht, umfassend:

- ein Auflager (4), das eine Fläche beinhaltet, die eine Ebene (6) definiert,
- mindestens einen Träger (8), erste und zweite Enden aufweisend, der geeignet ist, sich relativ zum Auflager (4) zu verschieben, und
- Mittel (10) zum Erfassen der Verschiebung des Trägers, die eingerichtet sind, um ein Signal zu liefern, das abhängig von der Verschiebung ist,

wobei der Träger (8) am Auflager (4) durch das erste Ende und senkrecht zur Ebene (6) verankert ist, und das zweite Ende des Trägers mindestens einen Aufnahmebereich (12) beinhaltet, der geeignet ist, einen oder mehrere Partikel (14) aufzunehmen, die geeignet sind, um die Verschiebung des Trägers zu verursachen oder zu verändern, um mindestens eine physikalische Eigenschaft des Partikels oder der Partikel ausgehend vom Signal zu bestimmen, das von den Mitteln (10) zur Erfassung der Verschiebung geliefert wird, wobei die Erfassungsvorrichtung **dadurch gekennzeichnet ist, dass**:

- die Erfassungsmittel zwischen dem Aufnahmebereich (12) und dem Auflager (4) angeordnet sind,
- die Erfassungsmittel (10) durch eine Dünnschicht-Abscheidungstechnik gebildet sind und in die Erfassungsvorrichtung integriert sind, und
- die Erfassungsmittel (10) ausgewählt sind aus piezoresistiven Dehnungsmessstreifen-Erfassungsmitteln, kapazitiven Erfassungsmitteln und piezoelektrischen Erfassungsmitteln.

2. Vorrichtung nach Anspruch 1, wobei die Erfassungsmittel (10) am Träger verankert sind und in mindestens einer Schicht ausgebildet sind, die parallel zur Ebene (6) ist.

3. Vorrichtung nach einem der Ansprüche 1 und 2, wobei ein Abschnitt des Aufnahmebereichs (12) in einer ersten Ebene, die parallel zur Ebene (6) ist, größer ist als der Abschnitt des Trägers (8) in einer zweiten Ebene, die ebenfalls parallel zur Ebene (6) ist.

4. Vorrichtung nach einem der Ansprüche 1 bis 3, mehr als einen Träger umfassend, nämlich eine Anordnung von Trägern (8), die in einem Netzwerk angeordnet sind.

5. Vorrichtung nach einem der Ansprüche 1 bis 4, wobei das zweite Ende des Trägers (8) mit einer Platte (20) versehen ist, die eine ebene Fläche beinhaltet, die im Wesentlichen senkrecht zum Träger ist und den Aufnahmebereich (12) bildet.

6. Vorrichtung nach einem der Ansprüche 1 bis 5, wobei der Träger (8) einen Resonator bildet, dessen Resonanzfrequenz variiert, wenn der Aufnahmebereich (12) den oder die Partikel (14) aufnimmt, und die Vorrichtung ferner Mittel (16) zum Betätigen des Trägers umfasst.

7. Vorrichtung nach Anspruch 6, wobei die Betätigungsmittel (16) ausgewählt sind aus den elektrostatischen Betätigungsmitteln, den piezoelektrischen Betätigungsmitteln, den thermoelastischen Betätigungsmitteln und den optischen Betätigungsmitteln.

8. Vorrichtung nach einem der vorhergehenden Ansprüche, wobei die piezoresistiven Dehnungsmessstreifen ausgewählt sind aus Siliziummessstreifen, Metallmessstreifen, Graphenmessstreifen und Kohlenstoffnanoröhren-Messstreifen.

9. Vorrichtung nach einem der vorhergehenden Ansprüche, die mit Mitteln (18) zur Verarbeitung des Signals versehen ist, das von den Mitteln (10) zum Erfassen der Verschiebung des Trägers (8) geliefert wird, wobei die Mittel (18) zur Verarbeitung des Signals ausgelegt sind, um die physikalische Eigenschaft zu bestimmen.

**Claims**

1. Micro-Electromechanical or Nano-Electromechanical detection device made of thin layer, comprising:

- a support (4) including a face defining a plane (6),
- at least one beam (8) with first and second ends and that can move relative to the support (4), and
- means (10) of detecting beam displacement, adapted to output a signal that depends on the displacement,

  wherein the beam (8) is anchored to the support (4) through the first end and is perpendicular to said plane (6), and the second end of the beam comprises at least one reception zone (12), that can receive one or several particles (14) that can provoke or modify displacement of the beam in order to determine at least one physical property of the particle(s) from the signal output by the displacement detection means (10), the detection device being **characterized in that**:

  - the detection means are located between the reception zone (12) and the support (4),
  - the detection means (10) are produced by thin layer deposition technique and are integrated to the detection device, and
  - the detection means (10) are chosen from among piezoresistive strain gauge detection means, capacitive detection means and piezoelectric detection means.

2. Device according to claim 1, wherein the detection means (10) are anchored to the beam and formed in at least one layer which is parallel to said plane (6).

3. Device according to either of claims 1 and 2, in which a section of the reception zone (12) in a first plane that is parallel to said plane (6), is larger than the section of the beam (8) in a second plane that is also parallel to said plane (6).

4. Device according to anyone of claims 1 to 3, comprising more than one beam, namely a set of beams (8) organised into an array.

5. Device according to any one of claims 1 to 4, in which the second end of the beam (8) is provided with a tray (20) comprising a plane face that is approximately perpendicular to the beam and forms the reception zone (12).

6. Device according to any one of claims 1 to 5, in which the beam (8) forms a resonator for which the resonant frequency varies when the reception zone (12) receives the particle(s), and the device also comprises means (16) of actuating the beam.

7. Device according to claim 6, in which the actuation means (16) are chosen from among electrostatic actuation means, piezoelectric actuation means, thermoelastic actuation means and optical actuation means.

8. Device according to one of previous claims, in which piezoresistive strain gauges are chosen from among silicon gauges, metal gauges, graphene gauges and carbon nanotube-based gauges.

9. Device according to any one of previous claims, provided with means (18) for processing the signal output by the means (10) for detecting displacement of the beam (8), the signal processing means (18) being designed to determine said physical property.

FIG. 1

FIG. 2

# FIG. 3

# FIG. 4

FIG. 5

FIG. 6

FIG. 7

FIG. 8

FIG. 9

FIG. 10

FIG. 11A

FIG. 11B

FIG. 11C

66

82                                      62

                                         60

# FIG. 11D

66          70

82                              62

                                60

# FIG. 11E

66      72      74

70

82                          62

                            60

# FIG. 11F

FIG. 11G

FIG. 11H

FIG. 11I

FIG. 11J

FIG. 11K

FIG. 12A

FIG. 12B

FIG. 12C

**FIG. 12D**

**FIG. 12E**

FIG. 12F

FIG. 12G

FIG. 13A

FIG. 13B

FIG. 13C

FIG. 13D

FIG. 13E

FIG. 13F

FIG. 13G

FIG. 13H

FIG. 13I

FIG. 13J

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2012034949 A, S. Hentz
- WO 2012034951 A, S. Hentz
- WO 2012034990 A, S. Hentz
- US 20100041091 A, Axelrod
- FR 2961016, T. Ernst

### Littérature non-brevet citée dans la description

- **K.L. EKINCI ; Y. T. TANG ; M. L. ROUKES.** Ultimate limits to inertial mass sensing based upon nanoelectromechanical systems. *Journal of Applied Physics,* 2004, vol. 95 (5), 2682
- **J. CHASTE ; A. EICHLER ; J. MOSER ; G. CEBALLOS ; R. RURALI ; A. BACHTOLD.** A nanomechanical mass sensor with yoctogram resolution. *Nature Nanotechnology,* 2012, vol. 7, 301-304
- **I. BARGATIN ; E.B. MYERS ; J. S. ALDRIDGE ; C. MARCOUX ; P. BRIANCEAU ; L. DURAFFOURG ; E. COLINET ; S. HENTZ ; P. ANDREUCCI ; M.L. ROUKES.** Large-scale intégration of nanoelectromechanical systems for gas sensing applications. *Nano letters,* 14 Mai 2012, vol. 12 (3), 1269-74
- **S. GUILLON ; S. SALOMON ; F. SEICHEPINE ; D. DEZEST ; F. MATHIEU ; A. BOUCHIER ; L. MAZENQ ; C. THIBAULT ; C. VIEU ; T. LEÏCHLÉ.** Biological functionalization of massively parallel arrays of nanocantilevers using microcontact printing. *Sensors and Actuators B: Chemical,* Janvier 2012, vol. 161, 1135-1138
- **A.K. NAIK ; M.S. HANAY ; W. K. HIEBERT ; X. L. FENG ; M. L. ROUKES.** Towards single-molecule nanomechanical mass spectrometry. *Nature Nanotechnology,* 2009, vol. 4, 445-450
- **S. DOHN ; W. SVENDSEN ; A. BOISEN ; O. HANSEN.** Mass and position détermination of attached particles on cantilever based mass sensors. *Review of Scientific Instruments,* 2007, vol. 78, 103303
- **E. MILE ; G. JOURDAN ; I. BARGATIN ; S. LABARTHE ; C. MARCOUX ; P. ANDREUCCI ; S. HENTZ ; C. KHARRAT ; E. COLINET ; L. DURAFFOURG.** In-plane nanoelectromechanical resonators based on silicon nanowire piezoresistive détection. *Nanotechnology,* 23 Avril 2010, vol. 21 (16), 165504
- **MO LI ; H.X. TANG ; M. L. ROUKES.** Ultra-sensitive NEMS-based cantilevers for sensing, scanned probe and very high-frequency applications. *Nature nanotechnology,* Février 2007, vol. 2 (2), 114-20
- **P. IVALDI ; J. ABERGEL ; M. H. MATHENY ; L. G. VILLANUEVA ; R.B. KARABALIN ; M. L. ROUKES ; P. ANDREUCCI ; S. HENTZ ; E. DEFAÿ.** 50 nm thick AIN film-based piezoelectric cantilevers for gravimétrie détection. *Journal of Micromechanics and Microengineering,* 2011, vol. 21, 085023
- **V. TOFFOLI et al.** Actuation of silicon pillar micro-mechanical resonators by Kelvin polarisation force. *Microelectronic Engineering,* 2016, vol. 111, 1-6